(19) Europäisches Patentamt
European Patent Office
Office européen des brevets

(11) **EP 4 641 686 A1**

(12) **EUROPEAN PATENT APPLICATION**
published in accordance with Art. 153(4) EPC

(43) Date of publication:
**29.10.2025 Bulletin 2025/44**

(21) Application number: **23907716.7**

(22) Date of filing: **20.12.2023**

(51) International Patent Classification (IPC):
*H01M 4/525* (2010.01)   *H01M 4/505* (2010.01)
*H01M 4/36* (2006.01)   *H01M 10/052* (2010.01)
*H01M 4/02* (2006.01)

(52) Cooperative Patent Classification (CPC):
**H01M 4/02; H01M 4/36; H01M 4/505; H01M 4/525; H01M 10/052**

(86) International application number:
**PCT/KR2023/021063**

(87) International publication number:
**WO 2024/136433 (27.06.2024 Gazette 2024/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.12.2022 KR 20220181362**

(71) Applicant: **L&F Co., Ltd.**
**Daegu 42724 (KR)**

(72) Inventors:
• **JEON, Jin Woo**
**Daegu 42712 (KR)**
• **KIM, Seok Woo**
**Daegu 42712 (KR)**
• **SHIN, Jun Ho**
**Daegu 42712 (KR)**
• **AHN, Hyun Woo**
**Daegu 42712 (KR)**
• **SON, Min Ji**
**Daegu 42712 (KR)**
• **HONG, Sung Joo**
**Daegu 42712 (KR)**

(74) Representative: **Jung, Minkyu**
**Wuesthoff & Wuesthoff**
**Patentanwälte und Rechtsanwalt PartG mbB**
**Schweigerstraße 2**
**81541 München (DE)**

(54) **POSITIVE ELECTRODE ACTIVE MATERIAL FOR SECONDARY BATTERY**

(57) The present invention provides a cathode active material for secondary batteries, which comprises a transition metal, has a residual lithium content on the particle surface of 1 wt% or less, and a BET surface area of 0.4 m²/g or more.

# EP 4 641 686 A1

**Description**

[Technical Field]

The present invention relates to a cathode active material for secondary batteries, which provides excellent electrochemical properties by satisfying the optimal size conditions for the residual lithium content on the particle surface and BET, thereby achieving superior performance.

[Background Art]

Lithium secondary batteries possess high energy density and voltage, and due to their characteristics such as long lifespan and low self-discharge rate, they are used in various fields, ranging from mobile devices to electric vehicles and energy storage systems, which are medium and large-sized applications. Recently, due to the increased demand for electric vehicles, cathode active materials with high energy density are required, and high-Ni NCM and NCA cathode materials are primarily being developed.

In the case of high-Ni cathode materials, during manufacturing, the formation of a Ni-O rock salt structure with no electrochemical activity is easily achieved, which results in sintering at relatively low temperatures. Further, in order to form a layered structure with high crystallinity, an excess amount of Li source is being added.

However, when an excess amount of Li source is added, unreacted lithium oxide in the form of $Li_2O$ is formed on the surface of the cathode active material. This lithium oxide reacts with substances such as $H_2O$ and $CO_2$ in the air and is converted into lithium hydroxide (LiOH), lithium carbonate ($Li_2CO_3$), and other compounds, collectively referred to as 'residual lithium." The residual lithium generated on the surface makes the NMP solvent alkaline during the preparation of an electrode slurry. This alkaline solvent then mixes with the PVdF binder, leading to gelation, which causes difficulties in electrode fabrication. Furthermore, at high temperatures and voltages, the residual lithium decomposes, generating gases ($H_2O$, $CO_2$, $O_2$, etc.) inside the battery, increasing pressure and degrading the stability of the battery.

To address these issues, various methods have been researched, such as removing residual lithium through a washing process, or performing dry or wet coating using a coating agent that reacts well with the residual lithium on the surface, without the washing process.

However, when removing residual substances such as LiOH and $Li_2CO_3$ on the surface using the methods mentioned above, there is a risk that not only the residual lithium will decrease, but also lithium ions within the structure may be removed, which can cause structural changes on the surface and degrade the electrochemical properties of the cathode active material.

Therefore, there is a need in the industry for a technology that effectively removes only the residual lithium present on the surface, without removing the internal lithium of the cathode active material, while simultaneously improving the stability of the particle surface.

[Disclosure]

[Technical Problem]

The present invention aims to solve the problems of the prior art mentioned above and the technical challenges that have been requested from the past.

Specifically, after extensive research and various experiments, the inventors of the present invention have confirmed that when the residual lithium and BET satisfy certain size ranges as described below, gelation and gas generation can be suppressed, allowing for the manufacture of secondary batteries with excellent efficiency and lifespan characteristics. Based on this, the present invention was completed.

[Technical Solution]

Therefore, the present invention provides a cathode active material for secondary batteries comprising a transition metal, wherein a residual lithium content on a particle surface is 1 wt% or less, and a BET is 0.4 $m^2$/g or more.

As explained earlier, it is preferable to have as little residual lithium as possible, which causes gelation and gas generation. However, during the process of removing this residual lithium, lithium ions within the crystal structure, i.e., the internal lithium of the active material, may also be partially removed, which can lead to a deterioration in electrochemical properties.

In this situation, the present invention provides the upper and lower limits of the organic correlation between the residual lithium content and BET (Brunauer, Emmett, Teller) that allow the cathode active material of the secondary battery to exhibit optimal electrochemical properties. The distinctiveness of these setting conditions can be confirmed in the experimental details described later. As an example, when the residual lithium content on the particle surface is reduced through a washing process, the residual lithium is removed, and the curved surface of the particles is exposed, resulting in an increase in BET. When the residual lithium content and BET satisfy the size range defined above, it can suppress gelation and gas generation while improving efficiency and lifespan characteristics.

Such residual lithium can typically be in the form of $Li_2CO_3$, LiOH, etc. It is preferable for the content of $Li_2CO_3$ to be 0.6 wt% or less, and the content of LiOH to be 0.42 wt% or less.

Residual lithium in the form of $Li_2CO_3$ and LiOH suppresses gelation and gas generation as their content decreases, so it is preferable that the content does not exceed the above-mentioned limits. However, even if these conditions are met, if the BET is less than 0.4 $m^2/g$, as defined earlier, the intended effects of the present invention cannot be achieved. Therefore, it is necessary that the BET be 0.4 $m^2/g$ or more, while the contents of $Li_2CO_3$ and LiOH satisfy the above conditions. In a more preferable example, the content of $Li_2CO_3$ may range from 0.22 to 0.60 wt%, and the content of LiOH may range from 0.37 to 0.40 wt%.

In the present invention, the organic correlation between the residual lithium content and BET can be set such that when the residual lithium content on the particle surface is defined as A wt%, the BET is defined as B $m^2/g$, and A/B is defined as C, the condition $C \leq 2.4$ is satisfied.

When C (i.e., A/B) exceeds 2.4, it indicates that the residual lithium has not been sufficiently removed, resulting in a high amount of residual lithium and a small BET. In this case, issues such as gelation and gas generation occur, making it undesirable.

As explained earlier, the removal of residual lithium can be achieved, for example, through a washing process. As the washing time increases, the residual lithium content decreases and BET also increases, which can satisfy the above conditions. However, as can be confirmed in the experimental details described later, when the washing time exceeds a certain range, the rate of decrease in residual lithium content diminishes within the range where C is less than 1.1, and the residual lithium content becomes nearly constant. Furthermore, the internal lithium of the active material may start to leach out, causing changes in the surface structure and potentially deteriorating electrochemical properties. Therefore, in a preferable example, C may range from 1.3 to 1.8.

The amount of residual lithium and BET may be influenced by the amount of lithium used in the manufacturing process of the active material. Therefore, in a specific example, when the Li/Me ratio in the active material is defined as L, the condition (L/C) > 0.41 can be set.

When an excess amount of lithium is used in the manufacturing process of the active material, the value of L increases. Therefore, to satisfy the above condition, it is necessary to sufficiently remove the residual lithium. The ratio L/C is preferably within the range of 0.41 to 1.1.

As explained earlier, the main components of residual lithium are $Li_2CO_3$ and LiOH. Therefore, BET, which has an organic correlation with residual lithium, can have its range conditions set based on the relationship between the content of $Li_2CO_3$ and LiOH.

In a specific example, when the content of $Li_2CO_3$ is defined as $A_1$ wt% and BET is defined as B $m^2/g$, the condition $(A_1/B) < 1.46$ can be set, and/or when the content of LiOH is defined as $A_2$ wt% and BET is defined as B $m^2/g$, the condition $(A_2/B) < 1.0$ can be set.

If $(A_1/B)$ is 1.46 or greater, or $(A_2/B)$ is 1.0 or greater, the issues of gelation and gas generation cannot be suppressed, which may lead to a decrease in the efficiency and lifespan characteristics of the battery. Therefore, the range settings as described above may be necessary.

Regarding the lower limit of the above conditions, if $(A_1/B)$ is 0.2 or less, or $(A_2/B)$ is 0.63 or less, the internal lithium of the active material may leach out, causing changes in the surface structure and leading to a deterioration in electrochemical properties. Therefore, $(A_1/B)$ is preferably in the range of greater than 0.20 and less than 1.46, and more preferably in the range of 0.50 to 1.15. $(A_2/B)$ is preferably in the range of greater than 0.63 and less than 1.00, and more preferably in the range of 0.65 to 0.80.

As previously explained, the removal of residual lithium tends to cause changes in the crystal structure, as some internal lithium of the active material is removed depending on the process or additional post-treatment level used to remove the residual lithium.

In a specific example, when the lattice constant along the a-axis in X-ray diffraction (XRD) analysis is defined as X Å and the Li/Me ratio of the core is defined as L, the condition $(L \times 0.015 + X) > 2.8864$ can be set. In another specific example, when the cation mixing of the core is defined as C wt% and the Li/Me ratio is defined as L, the condition $(L \times 6 + C) < 7.68$ can be set.

The specific conditions of the above equations are as follows.

When changes in the crystal structure occur during the removal of residual lithium, this can be expressed by the a-axis and cation mixing values in XRD measurements.

As an example, the change in the a-axis value compared to a given residual lithium removal condition at the same Li/Me ratio can be said to satisfy a value of 0.0003 Å or less. When the Li/Me ratio increases, the optimal a-axis value tends to decrease. This can be calculated as "(Li/Me) $\times$ 0.015 + a-axis," and as mentioned above, the condition exceeds 2.8864, and preferably satisfies a range of 2.8865 to 2.8866.

As another example, when the change in cation mixing compared to a given residual lithium removal condition at the same Li/Me ratio satisfies a value smaller than 0.1%, it can be said that the battery characteristics are excellent. When the Li/Me ratio increases, the optimal cation mixing tends to decrease. This can be calculated as "(Li/Me) $\times$ 6 + cation mixing," and as mentioned above, the condition is less than 7.68, and preferably satisfies a range of greater than 7.61 and less than 7.68.

Residual lithium can also be expressed as total lithium (TTL). Therefore, in a specific example, when the total residual lithium is defined as T wt% and the Li/Me ratio is defined as L, the condition (L $\div$ T) $\geq$ 4.6 can be set.

As an example, when the TTL compared to a given residual lithium removal condition at the same Li/Me ratio satisfies the range of 0.16 to 0.22%, it can be said to exhibit excellent battery characteristics. When the Li/Me ratio increases, the optimal TTL tends to increase. This can be calculated as "(Li/Me) $\div$ TTL," and as mentioned above, the condition is greater than or equal to 4.6, and preferably satisfies a range from 4.6 to 7.3.

The removal of residual lithium can be achieved through various methods. As explained in the subsequent experimental details, it can typically be carried out through washing, or without washing, by using a coating agent that reacts well with the residual lithium. For example, in the case of washing, the degree of residual lithium removal can be set by various process factors such as washing time, stirring speed for washing, and the amount of solution used for washing. However, to obtain a cathode active material with excellent electrochemical properties, it is preferable to effectively remove the residual lithium on the particle surface while minimizing the loss of internal lithium, which can be understood from the explanation above.

In a specific example, the cathode active material according to the present invention may comprise the composition represented by the following Chemical Formula 1.

$$\mathrm{Li[Li_xM_{1-x-y}D_y]O_{2-z}Q_z} \qquad (1)$$

In the formula,

M is one or more transition metal elements that are stable in a 4- or 6-coordinate state;
D is one or more elements selected from alkali earth metals, transition metals, and non-metals as dopants;
Q is one or more anions selected from F, S, and P;

$$0 \leq x \leq 0.1,\ 0 \leq y \leq 0.1,\ 0 \leq z \leq 0.2.$$

Examples of the representative transition metals (M) include one or more of Ni, Co, Mn, etc. Preferably, Ni may be included in an amount of at least 60 mol%, and more preferably at least 70 mol%, based on the total transition metal content.

Regarding the elemental composition above, in the examples and comparative examples described later, for instance, Zr (0.002 mol) and Al (0.021 mol) were used as doping materials to stabilize the structure during the manufacture of the cathode active material, and the Li/Me ratio was adjusted to perform primary sintering at 740°C. Furthermore, the sintered cathode active material underwent a washing process to remove residual lithium impurities, and as an example, $H_3BO_3$ was used as a coating material to stabilize the surface. The final cathode active material was then manufactured through secondary sintering at 305°C.

In the manufacturing process as described above, $ZrO_2$ and $Al(OH)_3$ are used as doping materials, and $H_3BO_3$ is used as the coating material. However, they are not limited to these materials, and one or more elements selected from W, Ti, B, Zr, Mo, Cr, Co, Al, Mg, Ta, Nb, F, Na, S can also be used. The sintering temperature is also not limited to the specified temperatures, and the ranges of 700°C $\leq$ primary sintering $\leq$ 800°C and 250°C $\leq$ secondary sintering $\leq$ 700°C may be used.

The present invention also provides a lithium secondary battery comprising the cathode active material. Since the other components and manufacturing methods of the lithium secondary battery are well known in the art, a detailed description thereof is omitted in this specification.

[Effects of the Invention]

As described above, the cathode active material for secondary batteries according to the present invention provides a technology that enhances battery performance through proper control of the BET and residual lithium size. This results in the suppression of issues such as gelation and gas generation, and enables the provision of secondary batteries with excellent efficiency and lifespan characteristics.

[Best mode]

Now, the present invention will be described in more detail with reference to the following examples. These examples should not be construed as limiting the scope of the present invention.

[Example 1]

(Preparation of Cathode Active Material)

The precursor particles of $Ni_{0.90}Co_{0.06}Mn_{0.04}(OH)_2$ with a molar ratio of Ni : Co : Mn = 90 : 6 : 4 and a D50 of approximately 15 $\mu$m, along with 0.002 mol of $ZrO_2$ as the Zr raw material, 0.021 mol of $Al(OH)_3$ as the Al raw material, and LiOH as the Li raw material, were dry mixed to achieve a Li/Me molar ratio of 1.00. The dry mixture was then filled into a mullite material sagger and heat-treated under an $O_2$ atmosphere at a sintering temperature of 740°C for 30 hours. The resulting sintered product was crushed and classified to manufacture the cathode active material with a particle size of approximately 14 to 15 $\mu$m.

The manufactured cathode active material was introduced into distilled water and subjected to a washing process by stirring at 300 rpm for 30 seconds to remove lithium impurities. The material was then filtered using a filter press. The washed cathode active material was dried in a vacuum oven at 150°C, and then dry mixed with 0.57 parts by weight of boric acid ($H_3BO_3$) per 100 parts by weight of the cathode active material. The mixture was heat-treated in an $O_2$ atmosphere at 305°C for 12 hours. Finally, the cathode active material was produced with Zr and Al doped in the core and boron coated on the surface. The resulting lithium metal oxide consists of secondary particles formed by the aggregation of primary particles, with a D50 of approximately 15 $\mu$m.

(Manufacture of Cathode)

The cathode active material prepared above, conductive material Super-P, and binder PVdF were mixed in a weight ratio of 96.5:1.5:2.0 with N-methylpyrrolidone (NMP) as the solvent to produce a cathode active material paste. This paste was then applied to an aluminum current collector, dried in an oven at 120°C, and rolled to manufacture the cathode.

(Manufacture of Lithium Secondary Battery)

The cathode manufactured above and the anode, which uses Li metal as the counter electrode, were assembled with a porous polyethylene film as the separator to create an electrode assembly. This electrode assembly was then positioned inside the battery case, and electrolyte was injected into the case to manufacture the lithium secondary battery. The electrolyte used was a mixture of ethylene carbonate, dimethyl carbonate, and diethyl carbonate (EC/DMC/DEC in a volume ratio of 1/2/1), with vinylene carbonate (VC, 2 wt%) added to the organic solvent, and 1.0M lithium hexafluorophosphate ($LiPF_6$) dissolved in it.

[Example 2]

Except for changing the washing time to 60 seconds, the cathode active material, the cathode, and the lithium secondary battery containing it were manufactured under the same conditions as Example 1.

[Example 3]

Except for mixing at the Li/Me ratio of 1.02 mol, the cathode active material, the cathode, and the lithium secondary battery containing it were manufactured under the same conditions as Example 1.

[Example 4]

Except for changing the washing time to 60 seconds, the cathode active material, the cathode, and the lithium secondary battery containing it were manufactured under the same conditions as Example 3.

[Example 5]

Except for mixing at the Li/Me ratio of 1.04 mol, the cathode active material, the cathode, and the lithium secondary battery containing it were manufactured under the same conditions as Example 1.

[Example 6]

Except for changing the washing time to 60 seconds, the cathode active material, the cathode, and the lithium secondary battery containing it were manufactured under the same conditions as Example 5.

[Example 7]

Except for mixing at the Li/Me ratio of 1.06 mol, the cathode active material, the cathode, and the lithium secondary battery containing it were manufactured under the same conditions as Example 1.

[Example 8]

Except for changing the washing time to 60 seconds, the cathode active material, the cathode, and the lithium secondary battery containing it were manufactured under the same conditions as Example 7.

[Example 9]

Except for mixing at the Li/Me ratio of 1.08 mol, the cathode active material, the cathode, and the lithium secondary battery containing it were manufactured under the same conditions as Example 1.

[Example 10]

Except for changing the washing time to 60 seconds, the cathode active material, the cathode, and the lithium secondary battery containing it were manufactured under the same conditions as Example 9.

[Comparative Example 1]

Except for changing the washing time to 10 seconds, the cathode active material, the cathode, and the lithium secondary battery containing it were manufactured under the same conditions as Example 1.

[Comparative Example 2]

Except for changing the washing time to 90 seconds, the cathode active material, the cathode, and the lithium secondary battery containing it were manufactured under the same conditions as Example 1.

[Comparative Example 3]

Except for changing the washing time to 120 seconds, the cathode active material, the cathode, and the lithium secondary battery containing it were manufactured under the same conditions as Example 1.

[Comparative Example 4]

Except for changing the washing time to 10 seconds, the cathode active material, the cathode, and the lithium secondary battery containing it were manufactured under the same conditions as Example 3.

[Comparative Example 5]

Except for changing the washing time to 90 seconds, the cathode active material, the cathode, and the lithium secondary battery containing it were manufactured under the same conditions as Example 3.

[Comparative Example 6]

Except for changing the washing time to 120 seconds, the cathode active material, the cathode, and the lithium secondary battery containing it were manufactured under the same conditions as Example 3.

[Comparative Example 7]

Except for changing the washing time to 10 seconds, the cathode active material, the cathode, and the lithium secondary battery containing it were manufactured under the same conditions as Example 5.

[Comparative Example 8]

Except for changing the washing time to 90 seconds, the cathode active material, the cathode, and the lithium secondary battery containing it were manufactured under the same conditions as Example 5.

[Comparative Example 9]

Except for changing the washing time to 120 seconds, the cathode active material, the cathode, and the lithium secondary battery containing it were manufactured under the same conditions as Example 5.

[Comparative Example 10]

Except for changing the washing time to 10 seconds, the cathode active material, the cathode, and the lithium secondary battery containing it were manufactured under the same conditions as Example 7.

[Comparative Example 11]

Except for changing the washing time to 90 seconds, the cathode active material, the cathode, and the lithium secondary battery containing it were manufactured under the same conditions as Example 7.

[Comparative Example 12]

Except for changing the washing time to 120 seconds, the cathode active material, the cathode, and the lithium secondary battery containing it were manufactured under the same conditions as Example 7.

[Comparative Example 13]

Except for changing the washing time to 10 seconds, the cathode active material, the cathode, and the lithium secondary battery containing it were manufactured under the same conditions as Example 9.

[Comparative Example 14]

Except for changing the washing time to 90 seconds, the cathode active material, the cathode, and the lithium secondary battery containing it were manufactured under the same conditions as Example 9.

[Comparative Example 15]

Except for changing the washing time to 120 seconds, the cathode active material, the cathode, and the lithium secondary battery containing it were manufactured under the same conditions as Example 9.

[Experimental Example 1]

For the cathode active materials manufactured in Examples 1 to 10 and Comparative Examples 1 to 15, residual lithium ($Li_2CO_3$, LiOH), BET, the a-axis length in the crystal structure, cation mixing, and other properties were measured and are shown in Tables 1 and 2 below.
The amount of residual lithium was measured under the following conditions: 5 g of sample (with an error range of $\pm$ 0.02 g) was placed in a beaker with 100 g of distilled water and stirred for 10 minutes using a magnetic bar. Then, the stirred sample was naturally filtered through filter paper, and the filtered filtrate was collected in a beaker for titration. After filling with 0.1N HCl as the titrant, air bubbles were removed from the cylinder, and the titration was performed using the DET (Dynamic Equivalence Point Titrations) method. The automatic completion conditions for the titration were set as pH 2.5, with Calculation set to FP(1) = 4.5, EP(1), and the titration speed set to the maximum, completing the measurement of residual lithium.
BET was measured under the following conditions: Micromeritics Tristar II 3020 was used, and the pretreatment was performed using Vacprep061 equipment. The pretreatment was carried out at 100°C for 80 minutes and at 300°C for 150 minutes. The BET measurement was then conducted at a temperature of -77K, measuring the adsorption amount at a relative pressure (P/Po) range of 0.05 to 0.3.

The a-axis length and cation mixing were confirmed from the results obtained through XRD analysis.

Additionally, the initial capacity and lifespan characteristics of the lithium secondary batteries manufactured in Examples 1 to 10 and Comparative Examples 1 to 15 were measured, and the results are shown in Table 3 below.

[Table 1]

| Sample | Li/Me | Washing time | Li$_2$CO$_3$ | LiOH | BET | (Li$_2$CO$_3$ +LiOH) / BET | a-axis | TTL | cation mixing |
|---|---|---|---|---|---|---|---|---|---|
| | [-] | [sec] | [wt%] | [wt%] | [m$^2$/g] | | [Å] | [wt%] | [wt%] |
| Comp. Ex. 1 | 1.00 | 10 | 0.57 | 0.41 | 0.39 | 2.5 | 2.8714 | 0.22 | 1.69 |
| Ex. 1 | 1.00 | 30 | 0.40 | 0.37 | 0.48 | 1.6 | 2.8715 | 0.18 | 1.66 |
| Ex. 2 | 1.00 | 60 | 0.26 | 0.37 | 0.50 | 1.3 | 2.8716 | 0.16 | 1.64 |
| Comp. Ex. 2 | 1.00 | 90 | 0.12 | 0.36 | 0.61 | 0.8 | 2.8717 | 0.13 | 1.60 |
| Comp. Ex. 3 | 1.00 | 120 | 0.10 | 0.36 | 0.66 | 0.7 | 2.8717 | 0.12 | 1.58 |
| Comp. Ex. 4 | 1.02 | 10 | 0.60 | 0.41 | 0.40 | 2.5 | 2.8711 | 0.23 | 1.56 |
| Ex. 3 | 1.02 | 30 | 0.45 | 0.37 | 0.49 | 1.7 | 2.8712 | 0.19 | 1.54 |
| Ex. 4 | 1.02 | 60 | 0.32 | 0.37 | 0.50 | 1.4 | 2.8713 | 0.17 | 1.52 |
| Comp. Ex. 5 | 1.02 | 90 | 0.12 | 0.36 | 0.59 | 0.8 | 2.8714 | 0.13 | 1.47 |
| Comp. Ex. 6 | 1.02 | 120 | 0.11 | 0.36 | 0.65 | 0.7 | 2.8714 | 0.13 | 1.46 |
| Comp. Ex. 7 | 1.04 | 10 | 0.65 | 0.41 | 0.41 | 2.6 | 2.8708 | 0.24 | 1.44 |
| Ex. 5 | 1.04 | 30 | 0.51 | 0.37 | 0.49 | 1.8 | 2.8709 | 0.20 | 1.42 |
| Ex. 6 | 1.04 | 60 | 0.40 | 0.37 | 0.50 | 1.5 | 2.8710 | 0.18 | 1.40 |
| Comp. Ex. 8 | 1.04 | 90 | 0.12 | 0.37 | 0.59 | 0.8 | 2.8711 | 0.13 | 1.36 |
| Comp. Ex. 9 | 1.04 | 120 | 0.13 | 0.36 | 0.65 | 0.8 | 2.8711 | 0.13 | 1.34 |
| Comp. Ex. 10 | 1.06 | 10 | 0.68 | 0.43 | 0.42 | 2.6 | 2.8705 | 0.25 | 1.33 |
| Ex. 7 | 1.06 | 30 | 0.53 | 0.38 | 0.50 | 1.8 | 2.8706 | 0.21 | 1.30 |
| Ex. 8 | 1.06 | 60 | 0.45 | 0.37 | 0.50 | 1.6 | 2.8707 | 0.19 | 1.28 |
| Comp. Ex. 11 | 1.06 | 90 | 0.16 | 0.36 | 0.57 | 0.9 | 2.8708 | 0.13 | 1.23 |
| Comp. Ex. 12 | 1.06 | 120 | 0.15 | 0.36 | 0.65 | 0.8 | 2.8709 | 0.13 | 1.22 |
| Comp. Ex. 13 | 1.08 | 10 | 0.73 | 0.43 | 0.42 | 2.8 | 2.8702 | 0.26 | 1.21 |
| Ex. 9 | 1.08 | 30 | 0.57 | 0.38 | 0.52 | 1.8 | 2.8704 | 0.22 | 1.18 |
| Ex. 10 | 1.08 | 60 | 0.49 | 0.37 | 0.53 | 1.6 | 2.8704 | 0.20 | 1.16 |
| Comp. Ex. 14 | 1.08 | 90 | 0.21 | 0.37 | 0.59 | 1.0 | 2.8705 | 0.15 | 1.13 |
| Comp. Ex. 15 | 1.08 | 120 | 0.20 | 0.39 | 0.60 | 1.0 | 2.8706 | 0.15 | 1.09 |

[Table 2]

| Sample | Residual Li amount | A$_1$/B | A$_2$/B | L/C | L÷T | L×0.015+X | L×6+C |
|---|---|---|---|---|---|---|---|
| | [wt%] | | | | | | |
| Comp. Ex. 1 | 0.96 | 1.46 | 1.00 | 0.41 | 4.5401 | 2.8864 | 7.69 |
| Ex. 1 | 0.77 | 0.83 | 0.77 | 0.62 | 5.4795 | 2.8865 | 7.66 |
| Ex. 2 | 0.63 | 0.52 | 0.74 | 0.79 | 6.4029 | 2.8866 | 7.64 |
| Comp. Ex. 2 | 0.48 | 0.20 | 0.59 | 1.27 | 7.8765 | 2.8867 | 7.60 |
| Comp. Ex. 3 | 0.46 | 0.15 | 0.55 | 1.43 | 8.1169 | 2.886745 | 7.58 |
| Comp. Ex. 4 | 1.01 | 1.50 | 1.03 | 0.40 | 4.4022 | 2.8864 | 7.68 |
| Ex. 3 | 0.82 | 0.92 | 0.76 | 0.61 | 5.3153 | 2.8865 | 7.66 |
| Ex. 4 | 0.69 | 0.64 | 0.74 | 0.74 | 6.0910 | 2.8866 | 7.64 |

(continued)

| Sample | Residual Li amount [wt%] | $A_1/B$ | $A_2/B$ | L/C | L÷T | L×0.015+X | L×6+C |
|---|---|---|---|---|---|---|---|
| Comp. Ex. 5 | 0.48 | 0.20 | 0.61 | 1.25 | 8.0340 | 2.8867 | 7.59 |
| Comp. Ex. 6 | 0.47 | 0.17 | 0.55 | 1.41 | 8.1548 | 2.88645 | 7.58 |
| Comp. Ex. 7 | 1.06 | 1.59 | 1.00 | 0.40 | 4.3136 | 2.8864 | 7.68 |
| Ex. 5 | 0.88 | 1.04 | 0.76 | 0.58 | 5.1186 | 2.8865 | 7.66 |
| Ex. 6 | 0.77 | 0.80 | 0.74 | 0.68 | 5.6986 | 2.8866 | 7.64 |
| Comp. Ex. 8 | 0.49 | 0.21 | 0.62 | 1.26 | 8.0872 | 2.8867 | 7.60 |
| Comp. Ex. 9 | 0.49 | 0.19 | 0.56 | 1.39 | 8.0764 | 2.88645 | 7.58 |
| Comp. Ex. 10 | 1.11 | 1.62 | 1.02 | 0.40 | 4.1974 | 2.8864 | 7.69 |
| Ex. 7 | 0.91 | 1.06 | 0.76 | 0.58 | 5.0515 | 2.8865 | 7.66 |
| Ex. 8 | 0.82 | 0.90 | 0.74 | 0.65 | 5.5237 | 2.8866 | 7.64 |
| Comp. Ex. 11 | 0.52 | 0.28 | 0.63 | 1.17 | 7.9164 | 2.8867 | 7.59 |
| Comp. Ex. 12 | 0.51 | 0.23 | 0.56 | 1.34 | 7.9246 | 2.88669 | 7.58 |
| Comp. Ex. 13 | 1.16 | 1.74 | 1.02 | 0.39 | 4.1231 | 2.8864 | 7.69 |
| Ex. 9 | 0.95 | 1.10 | 0.73 | 0.59 | 4.9687 | 2.8866 | 7.66 |
| Ex. 10 | 0.86 | 0.92 | 0.70 | 0.67 | 5.4157 | 2.8866 | 7.64 |
| Comp. Ex. 14 | 0.58 | 0.36 | 0.63 | 1.10 | 7.3580 | 2.8867 | 7.61 |
| Comp. Ex. 15 | 0.59 | 0.33 | 0.65 | 1.10 | 7.1666 | 2.8868 | 7.57 |

*

$$A_1/B = Li_2CO_3/BET$$
$$A_2/B = LiOH/BET$$
$$C = A/B = A_1/B + A_2/B$$
$$L = Li/Me$$
$$L/C = (Li/Me)/[(Li_2CO_3+LiOH)/BET]$$
$$L÷T = (Li/Me)/TTL$$
$$L×0.015+X = (Li/Me) ×0.015+a\text{-axis}$$
$$L×6+C = (Li/Me)×6+(cation\ mixing)$$

[Table 3]

| Sample | Initial capacity 0.1C/0.1C (4.3-2.5V, 25°C) | | | Cycle 0.5C/1.0C (4.3-3.0V, 45°C) |
|---|---|---|---|---|
| | CC | DC | Eff(%) | Lifespan retention @50th |
| | [mAh/g] | [%] | [%] | [%] |
| Comp. Ex. 1 | 238.8 | 214.7 | 89.9 | 87.9 |
| Ex. 1 | 239.3 | 217.8 | 91.0 | 92.0 |
| Ex. 2 | 239.6 | 217.8 | 90.9 | 92.3 |
| Comp. Ex. 2 | 239.7 | 217.4 | 90.7 | 91.3 |

(continued)

| Sample | Initial capacity 0.1C/0.1C (4.3-2.5V, 25°C) | | | Cycle 0.5C/1.0C (4.3-3.0V, 45°C) |
|---|---|---|---|---|
| | CC | DC | Eff(%) | Lifespan retention @50th |
| | [mAh/g] | [%] | [%] | [%] |
| Comp. Ex. 3 | 239.7 | 217.9 | 90.9 | 90.6 |
| Comp. Ex. 4 | 236.8 | 212.9 | 89.9 | 88.6 |
| Ex. 3 | 237.4 | 216.0 | 91.0 | 92.8 |
| Ex. 4 | 237.6 | 215.9 | 90.9 | 93.0 |
| Comp. Ex. 5 | 238.0 | 216.1 | 90.8 | 92.0 |
| Comp. Ex. 6 | 238.1 | 215.9 | 90.7 | 91.4 |
| Comp. Ex. 7 | 234.8 | 210.9 | 89.8 | 89.5 |
| Ex. 5 | 235.7 | 214.3 | 90.9 | 93.6 |
| Ex. 6 | 235.6 | 214.2 | 90.9 | 93.7 |
| Comp. Ex. 8 | 236.3 | 214.6 | 90.8 | 92.4 |
| Comp. Ex. 9 | 236.1 | 214.1 | 90.7 | 91.9 |
| Comp. Ex. 10 | 232.8 | 209.1 | 89.8 | 90.0 |
| Ex. 7 | 233.7 | 212.6 | 91.0 | 94.1 |
| Ex. 8 | 234.0 | 212.9 | 91.0 | 94.3 |
| Comp. Ex. 11 | 234.4 | 212.6 | 90.7 | 93.2 |
| Comp. Ex. 12 | 234.1 | 212.9 | 90.9 | 92.6 |
| Comp. Ex. 13 | 230.8 | 207.4 | 89.8 | 90.8 |
| Ex. 9 | 232.3 | 211.4 | 91.0 | 94.7 |
| Ex. 10 | 232.0 | 211.4 | 91.1 | 95.0 |
| Comp. Ex. 14 | 232.4 | 211.3 | 90.9 | 93.9 |
| Comp. Ex. 15 | 232.5 | 211.1 | 90.8 | 93.4 |

First, referring to the results in Table 1, when washing was performed under different washing times for the cathode active materials with various Li/Me ratios (1.00, 1.02, 1.04, 1.06, 1.08), it was observed that residual lithium decreased while BET increased. This is because, as the washing time increased, it became easier to remove the residual lithium on the surface, and the greater the amount of residual lithium removed, the larger the surface exposure.

On the other hand, after 90 seconds and beyond, despite the increase in washing time, it was observed that residual lithium showed little change, and only BET tended to increase. Accordingly, it can be predicted that after 60 seconds of washing, not only the residual lithium on the surface of the cathode active material but also lithium ions within the structure may be washed out, leading to a deterioration in electrochemical properties. This can be confirmed through changes in the a-axis length of the crystal structure and the degree of cation mixing. In this regard, referring to Table 2, comparing the results of initial capacity and lifespan retention of the cathode active materials, it can be observed that as the washing time increases beyond 60 seconds, the capacity remains at or below the same level, but the lifespan retention characteristic deteriorates.

Referring to Table 2, it can be seen that the cathode active materials of the embodiments according to the present invention generally satisfy the conditions of $(A_1/B) < 1.46$, $(A_2/B) < 1.0$, $(L/C) > 0.41$, $(L \times 0.015 + X) > 2.8864$, $(L \times 6 + C) < 7.68$, and $(L \div T) \geq 4.6$.

When specifically reviewing Tables 1 to 3, it can be seen from Example 2, Comparative Example 2, and Comparative Example 3 that as the washing time increased, there was little change in the residual lithium component LiOH, while $Li_2CO_3$ decreased and BET increased. In this case, when the residual lithium $(Li_2CO_3 + LiOH) / BET$ value falls within the range of 1.3 to 1.8, excellent capacity and cycle characteristics were observed.

Comparative Example 1 did not have sufficient washing time, and as a result, residual lithium, which is a resistance component on the surface of the cathode active material, was not adequately removed. Consequently, BET, capacity, and cycle characteristics were lower than those of Examples. Similarly, in Comparative Examples 4, 7, 10, and 13, the battery characteristics were degraded for the same reason. In Comparative Examples 2 and 3, the washing time was excessive, causing lithium ions within the cathode active material structure to be washed out, leading to a decrease in battery characteristics. The same degradation in battery characteristics was observed in Comparative Examples 5-6, 8-9, 11-12, and 14-15 for the same reason.

Although preferred embodiments of the present invention have been disclosed for illustrative purposes, those skilled in the art will appreciate that various modifications, additions, and substitutions are possible without departing from the scope and spirit of the invention as disclosed in the accompanying claims.

**Claims**

1. A cathode active material for secondary batteries comprising a transition metal, wherein a residual lithium content on a particle surface is 1 wt% or less, and a BET is 0.4 $m^2/g$ or more.

2. The cathode active material for secondary batteries according to Claim 1, wherein the content of $Li_2CO_3$ in a residual lithium is 0.6 wt% or less.

3. The cathode active material for secondary batteries according to Claim 1, wherein the content of LiOH in a residual lithium is 0.42 wt% or less.

4. The cathode active material for secondary batteries according to any one of Claims 1 to 3, wherein when the residual lithium content on the particle surface is defined as A wt%, the BET is defined as B $m^2/g$, and the ratio A/B is defined as C, the condition $C \leq 2.4$ is satisfied.

5. The cathode active material for secondary batteries according to Claim 4, wherein when a Li/Me ratio is defined as L, the condition (L/C) > 0.41 is satisfied.

6. The cathode active material for secondary batteries according to Claim 1 or 2, wherein when the content of $Li_2CO_3$ is defined as $A_1$ wt%, and the BET is defined as B $m^2/g$, the condition ($A_1/B$) < 1.46 is satisfied.

7. The cathode active material for secondary batteries according to Claim 1 or 3, wherein when the content of LiOH is defined as $A_2$ wt%, and the BET is defined as B $m^2/g$, the condition ($A_2/B$) < 1.0 is satisfied.

8. The cathode active material for secondary batteries according to Claim 1, wherein in X-ray diffraction (XRD) analysis, when a lattice constant along an a-axis is defined as X Å, and a Li/Me ratio of a core is defined as L, the condition ($L \times 0.015 + X$) > 2.8864 is satisfied.

9. The cathode active material for secondary batteries according to Claim 1, wherein when a cation mixing of a core is defined as C wt%, and a Li/Me ratio is defined as L, the condition ($L \times 6 + C$) < 7.68 is satisfied.

10. The cathode active material for secondary batteries according to Claim 1, wherein when a total residual lithium amount (Total Lithium; TTL) on the particle surface is defined as T wt%, and a Li/Me ratio is defined as L, the condition ($L \div T$) $\geq$ 4.6 is satisfied.

11. The cathode active material for secondary batteries according to Claim 1, wherein the cathode active material comprises the composition represented by the following Chemical Formula 1:

$$Li[Li_xM_{1-x-y}D_y]O_{2-z}Q_z \qquad (1)$$

In the formula,

M is one or more transition metal elements that are stable in a 4- or 6-coordinate state;
D is one or more elements selected from alkali earth metals, transition metals, and non-metals as dopants;
Q is one or more anions selected from F, S, and P;

$$0 \leq x \leq 0.1,\ 0 \leq y \leq 0.1,\ 0 \leq z \leq 0.2.$$

12. The cathode active material for secondary batteries according to Claim 11, wherein M comprises Ni, which accounts for at least 60 mol% of the total transition metal content.

13. A secondary battery comprising the cathode active material for secondary batteries according to Claim 1.

## INTERNATIONAL SEARCH REPORT

| International application No. |
|---|
| **PCT/KR2023/021063** |

| A. | CLASSIFICATION OF SUBJECT MATTER |
|---|---|

**H01M 4/525**(2010.01)i; **H01M 4/505**(2010.01)i; **H01M 4/36**(2006.01)i; **H01M 10/052**(2010.01)i; **H01M 4/02**(2006.01)i

According to International Patent Classification (IPC) or to both national classification and IPC

| B. | FIELDS SEARCHED |
|---|---|

Minimum documentation searched (classification system followed by classification symbols)

H01M 4/525(2010.01); H01M 10/052(2010.01); H01M 4/505(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 이차전지(secondary battery), 양극 활물질(cathode active material), 전이금속 (transition metal), 표면(surface), 잔류 리튬(residual lithium), BET(Brunauer–Emmett–Teller)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2022-0133813 A (LG CHEM, LTD.) 05 October 2022 (2022-10-05)<br>See paragraphs [0007], [0029], [0085], [0137]-[0138], [0146] and [0181]-[0187]; and example 2. | 1-13 |
| A | KR 10-2020-0131179 A (LG CHEM, LTD.) 23 November 2020 (2020-11-23)<br>See entire document. | 1-13 |
| A | KR 10-2020-0126372 A (SUMITOMO CHEMICAL CO., LTD. et al.) 06 November 2020 (2020-11-06)<br>See entire document. | 1-13 |
| A | KR 10-2022-0091430 A (LG ENERGY SOLUTION, LTD.) 30 June 2022 (2022-06-30)<br>See entire document. | 1-13 |
| A | KR 10-2021-0104053 A (SUMITOMO CHEMICAL CO., LTD.) 24 August 2021 (2021-08-24)<br>See entire document. | 1-13 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **01 April 2024** | **01 April 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/021063**

| Patent document cited in search report | | | Publication date (day/month/year) | Patent family member(s) | | | Publication date (day/month/year) |
|---|---|---|---|---|---|---|---|
| KR | 10-2022-0133813 | A | 05 October 2022 | CN | 117043116 | A | 10 November 2023 |
| | | | | EP | 4296237 | A1 | 27 December 2023 |
| | | | | KR | 10-2627382 | B1 | 23 January 2024 |
| | | | | WO | 2022-203434 | A1 | 29 September 2022 |
| KR | 10-2020-0131179 | A | 23 November 2020 | CN | 113711389 | A | 26 November 2021 |
| | | | | EP | 3939939 | A1 | 19 January 2022 |
| | | | | EP | 3939939 | A4 | 01 June 2022 |
| | | | | EP | 3939939 | B1 | 25 January 2023 |
| | | | | JP | 2022-525463 | A | 16 May 2022 |
| | | | | JP | 7278652 | B2 | 22 May 2023 |
| | | | | KR | 10-2397220 | B1 | 13 May 2022 |
| | | | | US | 2022-0190326 | A1 | 16 June 2022 |
| | | | | WO | 2020-231147 | A1 | 19 November 2020 |
| KR | 10-2020-0126372 | A | 06 November 2020 | CN | 111788725 | A | 16 October 2020 |
| | | | | CN | 111788725 | B | 09 June 2023 |
| | | | | EP | 3761413 | A1 | 06 January 2021 |
| | | | | EP | 3761413 | A4 | 08 December 2021 |
| | | | | JP | 2019-153435 | A | 12 September 2019 |
| | | | | JP | 6966959 | B2 | 17 November 2021 |
| | | | | US | 2021-0218022 | A1 | 15 July 2021 |
| | | | | WO | 2019-168091 | A1 | 06 September 2019 |
| KR | 10-2022-0091430 | A | 30 June 2022 | CN | 115485244 | A | 16 December 2022 |
| | | | | EP | 4129927 | A1 | 08 February 2023 |
| | | | | EP | 4129927 | A4 | 08 November 2023 |
| | | | | JP | 2023-526641 | A | 22 June 2023 |
| | | | | US | 2023-0352654 | A1 | 02 November 2023 |
| | | | | WO | 2022-139521 | A1 | 30 June 2022 |
| KR | 10-2021-0104053 | A | 24 August 2021 | CN | 113195414 | A | 30 July 2021 |
| | | | | EP | 3901099 | A1 | 27 October 2021 |
| | | | | EP | 3901099 | A4 | 14 September 2022 |
| | | | | JP | 2020-100541 | A | 02 July 2020 |
| | | | | JP | 6633796 | B1 | 22 January 2020 |
| | | | | US | 2022-0059834 | A1 | 24 February 2022 |
| | | | | WO | 2020-130123 | A1 | 25 June 2020 |

Form PCT/ISA/210 (patent family annex) (July 2022)